# EUROPEAN PATENT SPECIFICATION

(11) **EP 2 405 676 B1**
(45) Date of publication and mention of the grant of the patent: **26.06.2013**
(21) Application number: 10748621.9
(22) Date of filing: 18.02.2010
(51) Int. Cl.: H04W 4/06

(54) **RADIO BASE STATION APPARATUS AND WIRELESS COMMUNICATION METHOD**
FUNKBASISSTATIONSVORRICHTUNG UND DRAHTLOSKOMMUNIKATIONSVERFAHREN
APPAREIL DE STATION DE BASE RADIO ET PROCÉDÉ DE COMMUNICATION SANS FIL

(30) Priority: 03.03.2009 JP 2009049040
(43) Date of publication of application: 11.01.2012
(73) Proprietor: NTT DOCOMO, INC., Chiyoda-ku Tokyo 100-6150 (JP)
(72) Inventor: HIGUCHI, Kenichi, Tokyo 100-6150 (JP); MORIMOTO, Akihito, Tokyo 100-6150 (JP)
(74) Representative: HOFFMANN EITLE
(86) International application number: PCT/JP2010/052440
(87) International publication number: WO 2010/101025

(56) References cited:
- EP-A1- 2 051 409
- WO-A1-2008/142733
- WO-A2-2007/143753
- JP-A- 2008 079 262
- JP-T- 2006 513 639
- ALCATEL-LUCENT: "MBMS feedback content in Single Cell PTM", 3GPP DRAFT; R2-073480(MBMSCQI), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070815, 15 August 2007 (2007-08-15), XP050136183, [retrieved on 2007-08-15]
- LUCENT TECHNOLOGIES ET AL: "MIMO for E-MBMS in 5MHz LTE", 3GPP DRAFT; R1-062390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060823, 23 August 2006 (2006-08-23), XP050102908, [retrieved on 2006-08-23]
- NTT DOCOMO ET AL: "Basic Schemes in Downlink MIMO Channel Transmissions", 3GPP DRAFT; R1-060433 DL MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Denver, USA; 20060209, 9 February 2006 (2006-02-09), XP050101373, [retrieved on 2006-02-09]

## Description

### TECHNICAL FIELD

The present invention relates to a radio base station apparatus and a radio communication method in next-generation mobile communication systems.

### BACKGROUND ART

Recently, in the mobile communication network, there have been provided services that distribute moving image contents. In past these services, the streaming technique using a point-to-point connection is applied and mainly, the contents are transferred using a circuit switching domain. Therefore, in order to provide them as multimedia services to many users, the services that make effective use of network resources are needed.

In the 3GPP (3rd Generation Partnership Project), the MBMS (Multimedia Broadcast-Multicast Service) is standardized that provides services by multicast connection with use of a packet switching domain. This MBMS technique is a technique capable of providing broadcast message services and highspeed video streaming services, and is expected in the IMT-Advanced system and LTE (Long Term Evolution) system.

EP 2 051 409 A1 relates to a mobile station including a line quality measuring unit which measures SINR of a pilot symbol; a CQI generation unit which generates a CQI corresponding to the SINR; and a resource allocation unit allocates a subcarrier corresponding to the content of an inputted CQI among a plurality of subcarriers to the CQI according to a common reference table in a plurality of mobile stations. Accordingly, in a plurality of mobile stations, the CQI having the same content are mapped to the same subcarrier.

The document "MBMS feedback content in Single Cell PTM", 3GPP draft, R2-073480, relates to the content of the CQI which is reported during Single Cell Point To Multipoint transmission. It is proposed to include MIMO information within the CQI and to provide the user equipments with a list of estimated reception quality information each associated with a respective precoding vector comprised in the codebook.

### CITATION LIST

### NON-PATENT LITERATURE

NPL1: 3GPP, TR36.300

### SUMMARY OF THE INVENTION

### TECHNICAL PROBLEM

In the MBMS, the same data is transmitted simultaneously to plural users. Therefore, it is difficult to control transmission based on feedback information from all of the users. In view of this, it is generally difficult to apply the adaptive modulation and demodulation, channel coding and hybrid ARQ (Automatic Repeat reQuest) using the feedback information from every user.

However, the data rate of MBMS is determined by the quality at an end in a cell or certain area (formed of plural cells) to which the MBMS applies. Accordingly, there is a need to improve the reception quality of a user at an end in the cell or certain area.

The present invention was carried out in view of the foregoing and has an object to provide a radio base station apparatus and a radio communication method capable of improving the reception quality of a user at an end of a certain area or cell in MBMS.

### Solution to Problem

This object is accomplished by the radio base station apparatus according to claim 1 and the radio communication method according to claim 6. Especially, the present invention provides a radio base station apparatus supporting multimedia broadcast-multicast service, comprising: receiving section configured to receive feedback information for downlink transmission data; retransmission determining section configured to determine necessity of retransmission with use of the feedback information; spatial multiplexing section configured to, when retransmission is determined to be necessary, spatially multiplex multimedia broadcast-multicast service data initially transmitted and retransmitted data to transmit multiplexed data; and transmit diversity transmitting section configured to, when retransmission is determined to be unnecessary, transmit the multimedia broadcast-multicast service data initially transmitted with transmit diversity.

The present invention provides a radio communication method supporting Multimedia Broadcast-Multicast Service, comprising: receiving feedback information for downlink transmission data; determining necessity of retransmission with use of the feedback information; when retransmission is determined to be necessary, spatially multiplexing multimedia broadcast-multicast service data initially transmitted and retransmitted data to transmit multiplexed data; and when retransmission is determined to be unnecessary, transmitting the multimedia broadcast-multicast service data initially transmitted with transmit diversity.

### TECHNICAL ADVANTAGE OF THE INVENTION

According to the present invention, in the radio communication method supporting multimedia broadcast-multicast service, feedback information to the downlink transmission data is received, the feedback information is used to determine the necessity of retransmission, when retransmission is determined to be necessary, multimedia broadcast-multicast service data initially transmitted is spatially multiplexed with retransmitted data, and when retransmission is determined to be unnecessary, the multimedia broadcast-multicast service data initially transmitted is transmit with transmit diversity. With this structure, it is possible to improve the reception quality of a user at an end in a cell or a certain area in MBMS while keeping data rates constant.

### BRIEF DESCRIPTION OF THE DRAWINGS

Fig. 1 is a view for explaining a cell of MBMS according to an embodiment 1 of the present invention;
Fig. 2 is a view for explaining a configuration of a radio base station apparatus according to the embodiment 1 of the present invention;
Figs. 3(a) and 3(b) are views each for explaining a transmission form in the radio base station apparatus according to the embodiment 1 of the present invention;
Figs. 4(a) to 4(e) are views each for explaining an aspect of transmit diversity;
Fig. 5 is a view for explaining a certain area of MBMS according to an embodiment 2 of the present invention;
Fig. 6 is a view for explaining a configuration of a radio base station apparatus according to the embodiment 2 of the present invention; and
Fig. 7 is a view for explaining a configuration of a radio base station apparatus according to the embodiment 2 of the present invention.

### DESCRIPTION OF EMBODIMENTS

With reference to the attached drawings, embodiments of the present invention will be described in detail below.

### (Embodiment 1)

In this embodiment, explanation is made about MBMS in which the same data is transmitted simultaneously to mobile terminals (also referred to as user equipment (UE)) in a cell.

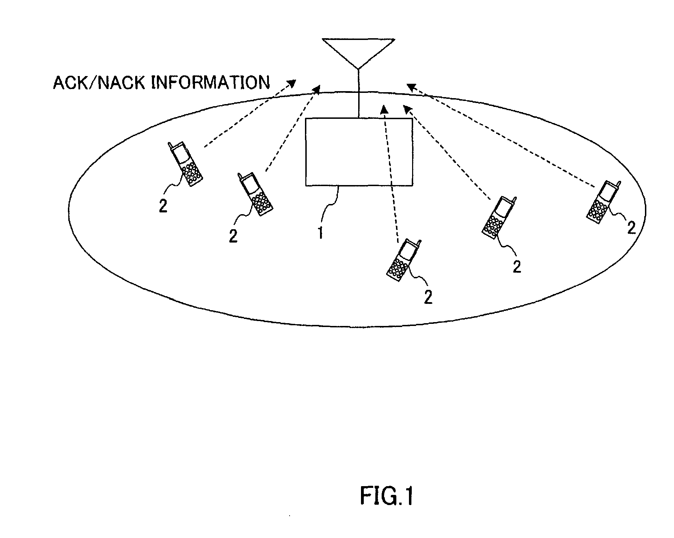

Fig. 1 is a view for explaining a cell of MBMS according to the embodiment 1 of the present invention. As illustrated in Fig. 1, in one cell, there are a radio base station apparatus 1 which supports multimedia broadcast-multicast service and a plurality of mobile terminals 2 that communicate with the radio base station apparatus 1. Between the radio base station apparatus 1 and the plural mobile terminals 2, hybrid ARQ is performed which is control using feedback information from each mobile terminal 2. That is, when the radio base station apparatus 1 transmits downlink transmission data and a mobile terminal 2 receives the downlink transmission data, the mobile terminal 2 detects an error of decoded data. When the data is decoded correctly at the mobile terminal 2, the mobile terminal 2 transmits an ACK (Acknowledgement) to the radio base station apparatus 1. On the other hand, when the data is decoded wrongly at the mobile terminal 2, the mobile terminal 2 transmits a NACK (Negative-Acknowledgement) to the radio base station apparatus 1. Receiving the NACK, the radio base station apparatus 1 retransmits the packet data.

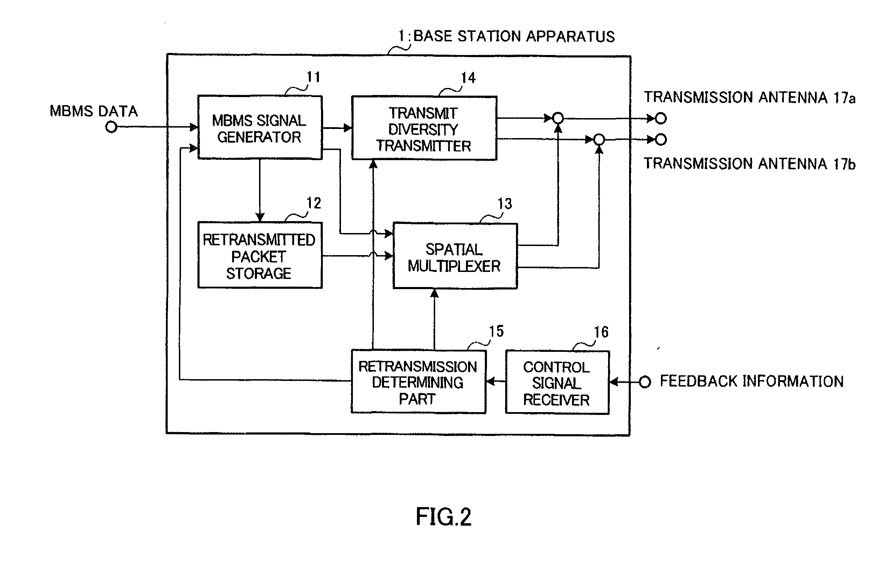

Fig. 2 is a view for explaining a configuration of the radio base station apparatus according to the embodiment 1 of the present invention. The radio base station apparatus illustrated in Fig. 2 mainly includes an MBMS signal generator 11 for generating an MBMS signal, a retransmitted packet storage 12 for storing transmission packets to retransmit, a spatial multiplexer 13 for spatially multiplexing a packet initially transmitted and a retransmitted packet and transmitting them, a transmit diversity transmitter 14 for transmitting an MBMS signal initially transmitted with transmit diversity, a control signal receiver 16 for receiving feedback information (here, ACK information or NACK information), a retransmission determining part 15 for determining the necessity of retransmission using the feedback information and two transmission antennas 17a and 17b.

The MBMS signal generator 11 generates data to distribute to the mobile terminal 2 (MBMS signal: multimedia broadcast-multicast service data). The MBMS signal generator 11 transmits the MBMS signal to the retransmitted packet storage 12 and transmits it to the spatial multiplexer 13 or the transmit diversity transmitter 14. In this case, when it is determined that retransmission is necessary at the retransmission determining part 15, the MBMS signal (initially transmitted packet) is transmitted to the spatial multiplexer 13 in which the packet is spatially multiplexed with a retransmitted packet and transmitted. This retransmitted packet is output from the retransmitted packet storage 12 to the spatial multiplexer 13. On the other hand, when it is determined that retransmission is unnecessary at the retransmission determining part 15, the MBMS signal (initially transmitted packet) is transmitted to the transmit diversity transmitter 14, applied to the transmit diversity and transmitted via the two antennas 17a and 17b.

The retransmitted packet storage 12 stores a transmission packet in order to retransmit the packet when the NACK is transmitted from the mobile terminal 2. The retransmitted packet stored in the retransmitted packet storage 12 is transmitted to the spatial multiplexer 13 when it is determined that retransmission is necessary at the retransmission determining part 15.

The spatial multiplexer 13 spatially multiplexes the MBMS signal initially transmitted (initially transmitted packet) and retransmitted data (retransmitted packet) when it is determined that retransmission is necessary. That is, when retransmission is determined to be necessary at the retransmission determining part 15 (when there is a retransmitted packet), the spatial multiplexer 13 spatially multiplexes the packet initially transmitted and the retransmitted packet. At this time, the packet initially transmitted (new packet) is output from the MBMS signal generator 11 and the retransmitted packet is output from the retransmitted packet storage 12. In this way, as the initially transmitted packet and the retransmitted packet are spatially multiplexed, the retransmitted packet can be transmitted using a part of a band originally assigned to the packet initially transmitted and there is no need to use any additional radio resource for the retransmitted packet. Therefore, the transmission rate can be kept constant (fixed transmission rate). The spatial multiplexer 13 transmits a spatially-multiplexed packet via the transmission antennas 17a and 17b.

When retransmission is determined to be unnecessary at the retransmission determining part 15, the transmit diversity transmitter 14 transmits the MBMS signal (initially transmitted packet) with transmit diversity via the transmission antennas 17a and 17b.

The control signal receiver 16 receives the ACK information or NACK information as feedback information for the downlink transmission data. The control signal receiver 16 outputs the feedback information to the retransmission determining part 15.

The retransmission determining part 15 determines the necessity of retransmission with use of the feedback information. As a method of determining the retransmission, there are following examples: retransmission is determined to be necessary when at least one user (one mobile terminal 2) has transmitted the NACK, retransmission is determined to be necessary when a threshold is set in the number of NACKs and the number of NACKs exceeds this threshold, and retransmission is determined to be necessary when a threshold is set in NACK reception power and the NACK reception power exceeds this threshold. The retransmission determining part 15 outputs a retransmission determination result (retransmission is necessary or unnecessary) to the MBMS signal generator 11, the spatial multiplexer 13 and the transmit diversity transmitter 14.

In the radio communication system comprising the radio base station apparatus 1 with the above-described structure, the service (MBMS) is provided at the following procedure. At the multicast mode, information of MBMS user service (parameter) obtained in advance by service subscription is used to request subscription to the service for the network thereby to take part in a multicast group. With this participation, the network connects the mobile terminal of the user to the multicast route. Then, with the session-start from the network side, MBMS bearer resources in the network are activated and data to distribute in this session is transferred to the mobile terminal.

Meanwhile, at the broadcast mode, as it is distributed to the overall service area, the procedure for service subscription is not necessary. The service can be provided by each mobile terminal obtaining a parameter required for connection from a received service announcement and tuning to a channel of the broadcast service.

In such MBMS transmission, when the feedback information for the downlink transmission data is received, the necessity of retransmission is determined using the feedback information, when retransmission is determined to be necessary, an MBMS signal initially transmitted (initially transmitted packet) and retransmitted data (retransmittedpacket) are spatially multiplexed, and when retransmission is determined to be not required, the MBMS signal initially transmitted is transmitted with transmit diversity.

Specifically, the radio base station apparatus 1 transmits a initially transmitted packet to each mobile terminal 2 on the downlink. The mobile terminal 2 receives and decodes the initially transmitted packet, and determines whether an error is detected or not. If an error is detected, the feedback information is NACK, and when no error is detected, the feedback information is ACK. Each mobile terminal 2 in the cell transmits this feedback information (ACK information or NACK information) to the radio base station apparatus 1 on the uplink. In the radio base station apparatus 1, the control signal receiver 16 receives the feedback information. This feedback information is output to the retransmission determining part 15. The retransmission determining part 15 determines if the initially transmitted packet is required to be retransmitted or not based on the feedback information. This determination is performed in the above-described manner. A result of this determination is output to the MBMS signal generator 11, the spatial multiplexer 13 and the transmit diversity transmitter 14.

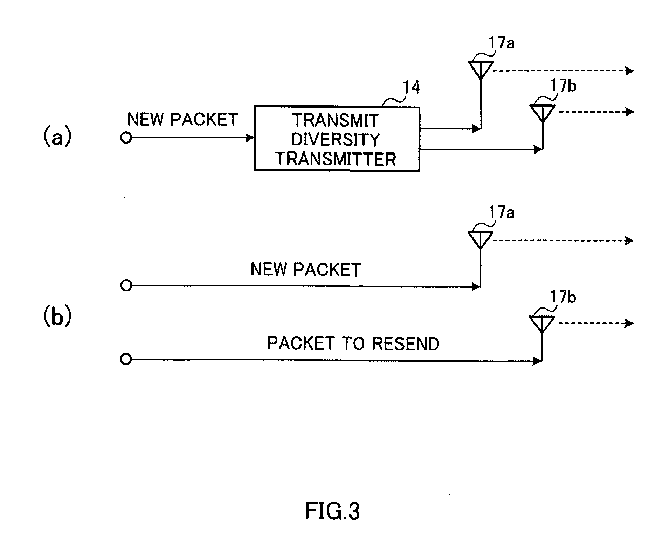

When retransmission is determined to be necessary (when there is a retransmitted packet), the spatial multiplexer 13 spatially multiplexes the initially transmitted packet from the MBMS signal generator 11 and the retransmitted packet from the retransmitted packet storage 12, and transmits the spatially multiplexed packets via the transmission antennas 17a and 17b. For example, as illustrated in Fig. 3(b), the initially transmitted packet (new packet) is transmission via one transmission antenna 17a and the retransmitted packet is transmitted via the other transmission antenna 17b. Then, the same packets are transmitted to all of the mobile terminals 2 in the cell. In this way, as spatial multiplexing is applied in retransmitting and there is no need to use any radio resources for retransmitting, retransmission can be performed without reduction in data rate. Besides, as the retransmission is applied, it is possible to improve the reception quality of the mobile terminals at an end of the cell in multicast transmission.

When retransmission is determined to be unnecessary (there is no retransmitted packet), the transmit diversity transmitter 14 transmits the initially transmitted packet, which is received from the MBMS signal generator 11, with transmit diversity via the transmission antennas 17a and 17b. That is, as illustrated in Fig. 3(a), the initially transmitted packet (new packet) is transmitted via each of the transmission antennas 17a and 17b. Then, the same packet is transmitted to all mobile terminals 2 in the cell. Thus, as the transmit diversity is applied only to the initially transmitted packet, it is possible to improve the reception quality at the mobile terminals.

Here, the transmit diversity is preferably open loop type transmit diversity in which feedback information is unnecessary. The open loop type transmit diversity includes FSTD (Frequency Switched Transmit Diversity), TSTD (Time Switched Transmit Diversity), SFBC (Space Frequency Block Code), STBC (Space Time Block Code), CDD (Cyclic Delay Diversity) and the like.

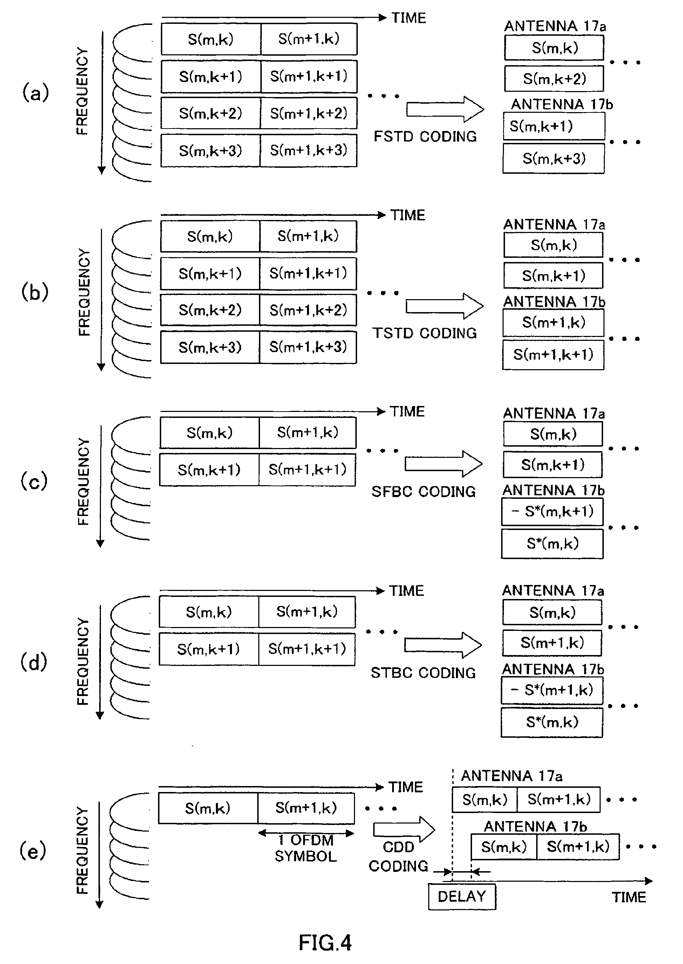

FSTD is a system in which transmission antennas are alternately changed between two adjacent subcarrier signals in the same OFDM symbol area, as illustrated in Fig. 4 (a) . TSTD is a system in which transmission antennas are alternately changed between adjacent OFDM symbols, as illustrated in Fig. 4 (b) . SFBC is a system in which two data symbols of adjacent two subcarriers at the same time are set and spatial-frequency coding (Alamouti coding) is performed, as illustrated in Fig. 4 (c). STBC is a system in which two subcarrier symbols in adjacent OFDM symbols are set and spatial-frequency coding (Alamouti coding) is performed, as illustrated in Fig. 4(d). CDD is a system in which the timing of a transmission signal of the transmission antenna 17b is delayed relative to the transmission signal of the transmission antenna 17a, as illustrated in Fig. 4(e). Here, a delay amount falls within CP (Cyclic prefix).

### (Embodiment 2)

In this embodiment, description is made about MBMS in which the same data is simultaneously transmitted to mobile terminals in a certain area composed of plural cells.

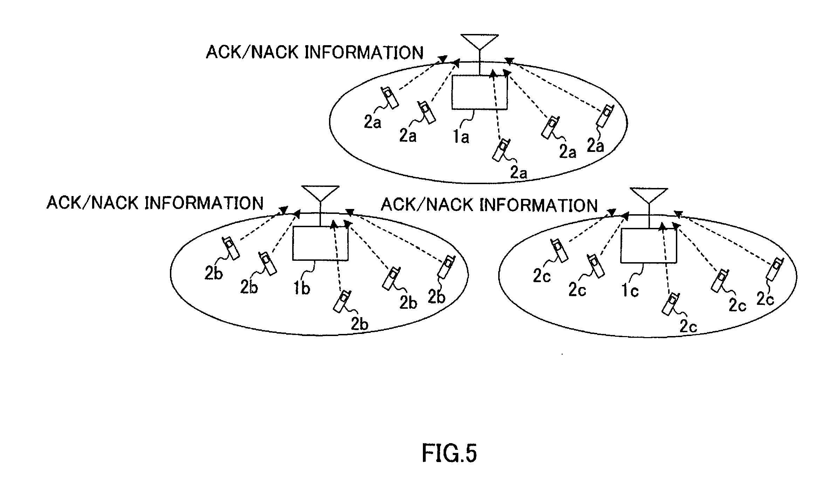

1 Fig. 5 is a view for explaining a certain area of MBMS according to the embodiment 2 of the present invention. As seen from Fig. 5, here, the certain area is formed of three cells. In each of the cells, there exist a radio base station apparatus 1a, 1b or 1c supporting multimedia broadcast-multicast service, and plural mobile terminals 2a that communicate with the radio base station apparatus 1a, plural mobile terminals 2b that communicate with the radio base station apparatus 1b, or plural mobile terminals 2c that communicate with the radio base station apparatus 1c. Between the radio base station apparatus 1a and the mobile terminals 2a, between the radio base station apparatus 1b and the mobile terminals 2b, and between the radio base station apparatus 1c and the mobile terminals 2c, hybrid ARQ is performed which is control using feedback information from each mobile terminal. That is, when the radio base station apparatuses 1a, 1b and 1c transmit downlink transmission data and the mobile terminals 2a, 2b and 2c receive the downlink transmission data, the mobile terminals 2a, 2b and 2c detect errors of decoded data. When the data is decoded correctly, the mobile terminals 2a, 2b and 2c transmit ACK to the radio base station apparatuses 1a, 1 and 1c. On the other hand, when the data is decoded wrongly, the mobile terminals 2a, 2b and 2c transmit NACK to the radio base station apparatuses 1a, 1b and 1c. When receiving NACK, the radio base station apparatus 1 retransmits its packet data and once it receives an ACK, it starts to transmit a next packet.

In this system, each radio base station apparatus determines if retransmission is necessary, one of plural radio base station apparatuses determines if retransmitting to a certain area is necessary. When retransmission is determined to be performed, it determines the timing, and transmits the timing information to other radio base station apparatuses. Then, all the radio base station apparatuses in the certain area transmit packets to mobile terminals with timing.

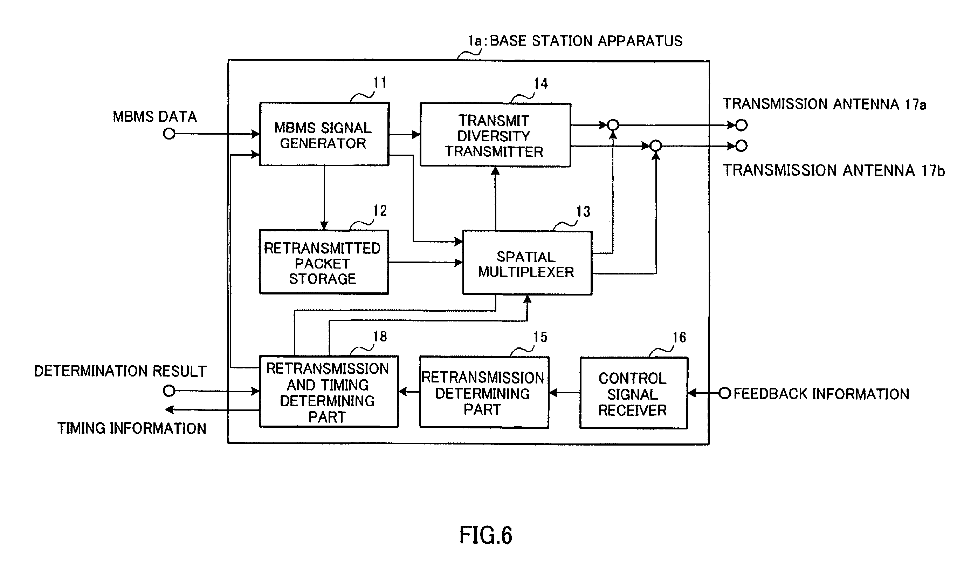

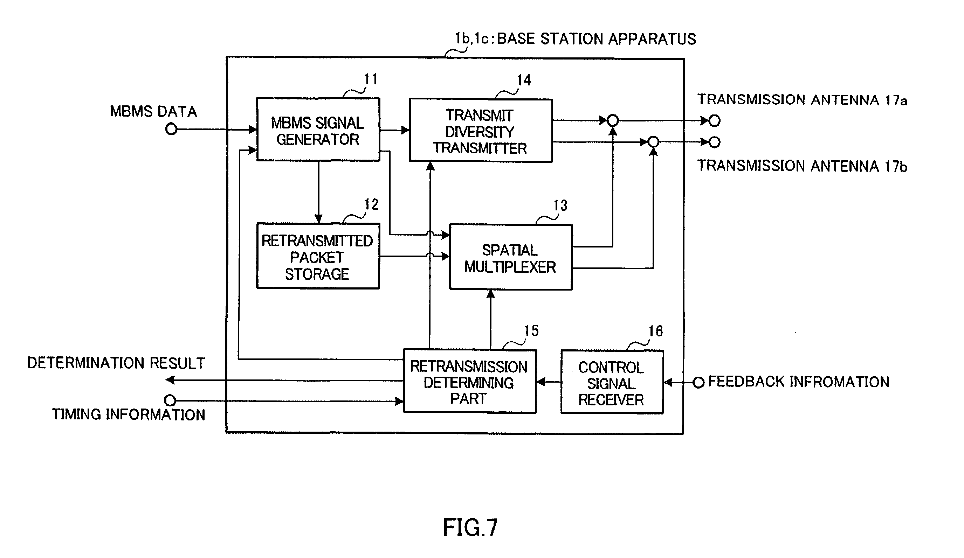

Figs. 6 and 7 are views for explaining the configurations of the radio base station apparatuses according to the embodiment 2 of the present invention. In Figs. 6 and 7, the same parts as those in Fig. 2 are denoted by like reference numerals and its explanation is omitted.

Fig. 6 illustrates the configuration of one radio base station apparatus 1a out of the plural radio base station apparatuses 1a, 1b and 1c. The radio base station apparatus 1a has a retransmission and timing determining part 18 that determines the necessity of retransmission to the certain area with use of the retransmission determination results from the radio base station apparatus 1a itself and the other radio base station apparatuses 1b and 1c and determines the transmission timing.

The retransmission determining part 15 determines the necessity of retransmission with use of feedback information. Determination is performed in the above-described manner. The retransmission determining part 15 outputs a retransmission determination result (retransmission is necessary /unnecessary) to the retransmission and timing determining part 18. Besides, the retransmission determination results from the other radio base station apparatuses 1b and 1c are also transmitted to the retransmission and timing determining part 18.

The retransmission and timing determining part 18 uses the retransmission determination results from the radio base station apparatus 1a and the other radio base station apparatuses 1b and 1c to determine the necessity of retransmission to the certain area and determines the transmission timing. Determination is performed in the above-described manner. When the retransmission and timing determining part 18 determines the necessity of retransmission and the timing, it outputs the timing information to the MBMS signal generator 11, the spatial multiplexer 13 and the transmit diversity transmitter 14 of the radio base station apparatus 1a. Besides, when the retransmission and timing determining part 18 determines the necessity of retransmission and the timing, it transmits the timing information to the other radio base station apparatuses 1b and 1c. Also when retransmission is not performed, the retransmission and timing determining part 18 determines the transmission timing and transmits the timing information to the other radio base station apparatuses 1b and 1c.

Fig. 7 illustrates the configurations of the radio base station apparatuses 1b and 1c other than the radio base station apparatus 1a in the plural radio base station apparatuses 1a, 1b and 1c. The retransmission determining part 15 of the radio base station apparatus 1b, 1c transmits a retransmission determination result to the radio base station apparatus 1a and receives timing information from the radio base station apparatus 1a. The retransmission determining part 15 outputs the timing information (including retransmission determination information, when necessary) to the MBMS signal generator 11, the spatial multiplexer 13 and the transmit diversity transmitter 14 .

In the MBMS transmission in the system illustrated in Fig. 5, the plural radio base station apparatuses 1a, 1b and 1c supporting multimedia broadcast-multicast service in the certain area receive feedback information for the downlink transmission data and determine the necessity of retransmission using the feedback information. Out of the plural radio base station apparatuses 1a, 1b and 1c, one radio base station apparatus 1a determines the necessity of retransmission for the certain area with use of retransmission determination results from the radio base station apparatus 1a and the other radio base station apparatuses 1b and 1c and determines the transmission timing. When it determines retransmission is necessary, it spatially multiplexes the MBMS signal initially transmitted (initially transmitted packet) and the retransmitted data (retransmitted packet) and transmits the multiplexed packets. When it determines retransmission is not necessary, it transmits the MBMS signal initially transmitted with transmit diversity. In this case, when retransmission is determined to be required at the radio base station apparatuses 1b and 1c other than the radio base station apparatus 1a of the plural radio base station apparatuses 1a, 1b and 1c, the spatially multiplexed MBMS signal and retransmitted data are transmitted in accordance with the timing information from the one radio base station apparatus 1a. Besides, also when retransmission is not performed, the radio base station apparatus 1a determines the transmission timing and transmits the timing information to the other radio base station apparatuses 1b and 1c. In this way, in packet transmission, the plural radio base station apparatuses 1a, 1b and 1c are in synchronization with each other.

Specifically, the radio base station apparatuses 1a, 1b and 1c transmit the initially transmitted packets to the mobile terminals 2a, 2b and 2c, respectively, on the downlink. The mobile terminals 2a, 2b and 2c receive the initially transmitted packets, decode them and determine if there is an error detected. When an error is detected, the feedback information is NACK, and when no error is detected, the feedback information is ACK. The mobile terminals 2a, 2b and 2c in the certain area transmit this feedback information (ACK information or NACK information) to the radio base station apparatuses 1a, 1b and 1c, respectively, on the uplink. In each of the radio base station apparatuses 1a, 1b and 1c, the control signal receiver 16 receives the feedback information. This feedback information is output to the retransmission determining part 15. The retransmission determining part 15 determines if the initially transmitted packet is required to be resent or not based on the feedback information. This determination is performed in the above-described manner. A determination result is output to the retransmission and timing determining part 18 of the radio base station apparatus 1a.

When the retransmission and timing determining part 18 determines retransmission is necessary (there is a retransmitted packet), the spatial multiplexer 13 of each of the radio base station apparatuses 1a, 1b and 1c spatially multiplexes the initially transmitted packet from the MBMS signal generator 11 and the retransmitted packet from the retransmitted packet storage 12 and transmits the spatially multiplexed packets via the transmission antennas 17a and 17b. For example, as illustrated in Fig. 3(b), the initially transmitted packet (new packet) is transmitted via one transmission antenna 17a and the retransmitted packet is transmitted via the other transmission antenna 17b. Then, the same packet is transmitted to all of the mobile terminals 2a, 2b and 2c in the certain area with timing. In this way, as the spatial multiplexing is applied in retransmitting and there is no need to use any radio resource for retransmitting, retransmission can be performed without reduction in data rate. Besides, as retransmission can be applied, it is possible to improve the reception quality of a mobile terminal at an end of the cell in multicast transmission.

When the retransmission and timing determining part 18 determines retransmission is not required (there is no retransmitted packet), the transmit diversity transmitter 14 of each of the radio base station apparatuses 1a, 1b and 1c transmits the initially transmitted packet from the MBMS signal generator 11 via the transmission antennas 17a and 17b with transmit diversity. That is, as illustrated in Fig. 3 (a), the initially transmitted packet (new packet) is transmitted via each of the transmission antennas 17a and 17b. At this time, the same packet is transmitted to all of the mobile terminals 2a, 2b and 2c in the certain area with timing. In this way, as the transmit diversity is applied to the initially transmitted packet, it is possible to improve the reception quality in the mobile terminals.

The present invention is not limited to the above-described embodiments and may be embodied in various modified forms. For example, the above-described embodiments 1 and 2 have been described by way of example where there are two antennas. However, this is not intended for limiting the present invention. The present invention may apply to the case where there are three or more transmission antennas. Besides, the embodiments 1 and 2 have been described on the assumption that when a initially transmitted packet and a retransmitted packet are spatially multiplexed to be transmitted, the initially transmitted packet and the retransmitted packet are assigned to the two transmission antennas, respectively. However, this is not intended for limiting the present invention. The present invention may apply to the case where the initially transmitted packet and the retransmitted packet are combined to be transmitted via the two transmission antennas. Further, the embodiment 2 has been described by way of example in which after the necessity of retransmission is determined at each radio base station apparatus, its retransmission determination result is used to determine the necessity of retransmission finally. However, this is not intended for limiting the present invention. The present invention may apply to the case where feedback information of all cells is transmitted to one radio base station apparatus and the one radio base station apparatus determines the necessity of retransmission.

The present embodiment may be modified appropriately as to the number of processing parts and processing procedure in the above description, without departing from the scope of the present invention. Besides, each element in the figures presents its function and each functional block may be realized by hardware or software. Other structures may be also modified appropriately without departing from the scope of the present invention.

## Claims

1. A radio base station apparatus (1) supporting multimedia broadcast-multicast service, comprising:
receiving section (16) configured to receive feedback information for downlink transmission data;
retransmission determining section (15) configured to determine necessity of retransmission with use of the feedback information;
**characterized by**
spatial multiplexing section (13) configured to, when retransmission is determined to be necessary, spatially multiplex new multimedia broadcast-multicast service data and retransmitted data to transmit multiplexed data; and
transmit diversity transmitting section (14) configured to, when retransmission is determined to be unnecessary, transmit the new multimedia broadcast-multicast service data with transmit diversity.

2. The radio base station apparatus according to claim 1, wherein the radio base station apparatus is one out of a plurality of radio base station apparatuses supporting multimedia broadcast-multicast service in a certain area, the radio base station apparatus further comprising:
retransmission and timing determining section (18) configured to determine necessity of retransmission to the certain area with use of retransmission determination results from the radio base station apparatus and the other radio base station apparatuses and determine transmission timing.

3. The radio base station apparatus according to claim 2, wherein the radio base station apparatus is one out of a plurality of radio base station apparatuses supporting multimedia broadcast-multicast service in a certain area, wherein
the transmit diversity transmitting section (14) is configured to, when retransmission is determined to be unnecessary, transmit the new multimedia broadcast-multicast service data with transmit diversity in accordance with transmission timing information from the radio base station apparatus.

4. The radio base station apparatus (1) of any one of claims 1 to 3, wherein when retransmission is determined to be unnecessary, the transmit diversity transmitting section transmits the new multimedia broadcast-multicast service data.

5. The radio base station apparatus (1) of any one of claims 1 to 4, wherein the transmit diversity is open loop type transmit diversity.

6. A radio communication method supporting Multimedia Broadcast-Multicast Service, comprising:
receiving feedback information for downlink transmission data;
determining necessity of retransmission with use of the feedback information;
**characterized by**
when retransmission is determined to be necessary, spatially multiplexing new multimedia broadcast-multicast service data and retransmitted data to transmit multiplexed data; and
when retransmission is determined to be unnecessary, transmitting the new multimedia broadcast-multicast service data with transmit diversity.

7. The radio communication method according to claim 6
in a plurality of radio base station apparatuses supporting Multimedia Broadcast-Multicast Service in a certain area, further comprising:
in one of the radio base station apparatuses, determining necessity of retransmission to the certain area with use of retransmission determination results from the radio base station apparatus and the other radio base station apparatuses, and determining transmission timing.

8. The radio communication method of claim 7, wherein, when retransmission is determined to be necessary, radio base station apparatuses other than the one radio base station apparatus out of the radio base station apparatuses transmit the spatially multiplexed new multimedia broadcast-multicast service data and retransmitted data in accordance with transmission timing information from the one radio base station apparatus.

9. The radio communication method of any one of claims 6 to 8, wherein when retransmission is determined to be unnecessary, the new multimedia broadcast service data is transmitted with transmit diversity.

10. The radio communication method of any one of claims 6 to 9, wherein the transmit diversity is open loop type transmit diversity.

## Patentansprüche

1. Funkbasisstationsvorrichtung (1), die einen Multimedia-Broadcast-Multicast-Dienst unterstützt, umfassend:
einen Empfangsabschnitt (16), der eingerichtet ist zum Empfangen von Rückmeldeinformation für Downlink-Übertragungsdaten;
einen Wiederübertragungs-Bestimmungsabschnitt (15), der eingerichtet ist zum Bestimmen einer Notwendigkeit einer Wiederübertragung unter Verwendung der Rückmeldeinformation;
**gekennzeichnet durch**
einen Raummultiplexabschnitt (13), der eingerichtet ist, wenn eine Wiederübertragung als notwendig bestimmt wird, neue Multimedia-Broadcast-Multicast-Dienstdaten und wiederübertragene Daten räumlicht zu multiplexen, um die gemultiplexten Daten zu übertragen; und
einen Übertragungsdiversitäts-Übertragungsabschnitt (14), der eingerichtet ist, wenn eine Wiederübertragung als unnotwendig bestimmt wird, die neuen Multimedia-Broadcast-Multicast-Dienstdaten mit Übertragungsdiversität zu übertragen.

2. Funkbasisstationsvorrichtung nach Anspruch 1, wobei die Funkbasisstationsvorrichtung eine aus einer Vielzahl von Funkbasisstationsvorrichtungen ist, die Multimedia-Broadcast-Multicast-Dienst in einem bestimmten Bereich unterstützen, wobei die Funkbasisstationsvorrichtung weiterhin umfasst:
einen Wiederübertragungs- und Zeitsteuer-Bestimmungsabschnitt (18), der eingerichtet ist zum Bestimmen einer Notwendigkeit einer Wiederübertragung an den bestimmten Bereich unter Verwendung von Wiederübertragungsbestimmungsergebnissen von der Funkbasisstationsvorrichtung und den anderen Funkbasisstationsvorrichtungen und zum Bestimmen einer Übertragungszeitsteuerung.

3. Funkbasisstationsvorrichtung nach Anspruch 2, wobei die Funkbasisstationsvorrichtung eine aus einer Vielzahl von Funkbasisstationsvorrichtungen ist, die einen Multimedia-Broadcast-Multicast-Dienst in einem bestimmten Bereich unterstützt, wobei
der Übertragungsdiverstitäts-Übertragungsabschnitt (14) eingerichtet ist, wenn eine Wiederübertragung als unnötig bestimmt wird, die neuen Multimedia-Broadcast-Multicast-Dienstdaten mit Übertragungsdiversität zu übertragen, in Übereinstimmung mit Übertragungszeitsteuerinformation von der Funkbasisstationsvorrichtung.

4. Funkbasisstationsvorrichtung (1) nach einem der Ansprüche 1 bis 3, wobei, wenn eine Wiederübertragung als unnötig bestimmt wird, der Übertragungsdiversitäts-Übertragungsabschnitt die neuen Multimedia-Broadcast-Multicast-Dienstdaten überträgt.

5. Funkbasisstationsvorrichtung (1) nach einem der Ansprüche 1 bis 4, wobei die Übertragungsdiversität eine Übertragungsdiversität vom offenen Schleifentyp ist.

6. Funkkommunikationsverfahren, das einen Multimedia-Broadcast-Multicast-Dienst unterstützt, umfassend:
Empfangen von Rückmeldeinformation von Downlink-Übertragungsdaten;
Bestimmen einer Notwendigkeit einer Wiederübertragung unter Verwendung der Rückmeldeinformation;
**gekennzeichnet durch**,
wenn eine Wiederübertragung als notwendig bestimmt wird, räumliches Multiplexen neuer Multimedia-Broadcast-Multicast-Dienstdaten und wiederübertragene Daten, um gemultiplexte Daten zu übertragen; und
wenn eine Wiederübertragung als unnötig bestimmt wird, Übertragen der neuen Multimedia-Broadcast-Multicast-Dienstdaten mit Übertragungsdiversität.

7. Funkbasisstationsverfahren nach Anspruch 6 in einer Vielzahl von Funkbasisstationsvorrichtungen, die einen Multimedia-Broadcast-Multicast-Dienst in einem bestimmten Bereich unterstützt, weiterhin umfassend:
in einer der Funkbasisstationsvorrichtungen, Bestimmen einer Notwendigkeit einer Wiederübertragung an den bestimmten Bereich unter Verwendung von Wiederübertragungsbestimmungsergebnissen von der Funkbasisstationsvorrichtung und der anderen Funkbasisstationsvorrichtungen, und Bestimmen einer Übertragungszeitsteuerung.

8. Funkkommunikationsverfahren nach Anspruch 7, wobei, wenn eine Wiederübertragung als notwendig bestimmt wird, Funkbasisstationsvorrichtungen verschieden von der einen Funkbasisstationsvorrichtung aus den Funkbasisstationsvorrichtungen, die räumlich gemultiplexten neuen Multimedia-Broadcast-Multicast-Dienstdaten und wiederübertragene Daten überträgt in Übereinstimmung mit Übertragungszeitsteuerinformation von der einen Funkbasisstationsvorrichtung.

9. Funkkommunikationsverfahren nach einem der Ansprüche 6 bis 8, wobei, wenn eine Wiederübertragung als notwendig bestimmt wird, die neuen Multimedia-Broadcast-Dienstdaten mit Übertragungsdiversität übertragen werden.

10. Funkkommunikationsverfahren nach einem der Ansprüche 6 bis 9, wobei die Übertragungsdiversität eine Übertragungsdiversität vom offenen Schleifentyp ist.

## Revendications

1. Appareil de station de base de radiodiffusion (1) acceptant un service de diffusion - multidiffusion multimédia, comprenant :
une section de réception (16) configurée pour recevoir une information en retour pour des données de transmission entrantes ;
une section de détermination de retransmission (15) configurée pour déterminer si une retransmission est nécessaire en utilisant l'information en retour ;
**caractérisé par**
une section de multiplexage spatial (13) configurée pour, quand il est déterminé qu'une retransmission est nécessaire, effectuer un multiplexage spatial des nouvelles données de service de diffusion - multidiffusion multimédia et des données retransmises pour transmettre des données multiplexées ; et
une section de transmission de diversité d'émission (14) configurée pour, quand il est déterminé qu'une retransmission est inutile, transmettre les nouvelles données de service de diffusion - multidiffusion multimédia avec une diversité d'émission.

2. Appareil de station de base de radiodiffusion selon la revendication 1, dans lequel l'appareil de station de base de radiodiffusion est un appareil parmi une pluralité d'appareils de station de base de radiodiffusion acceptant un service de diffusion - multidiffusion multimédia dans une zone donnée, l'appareil de station de base de radiodiffusion comprenant en outre :
une section de détermination de retransmission et de cadence (18) configurée pour déterminer si une retransmission vers la zone donnée est nécessaire en utilisant les résultats de la détermination de retransmission provenant de l'appareil de station de base de radiodiffusion et des autres appareils de station de base de radiodiffusion et pour déterminer une cadence de transmission.

3. Appareil de station de base de radiodiffusion selon la revendication 2, dans lequel l'appareil de station de base de radiodiffusion est un appareil parmi une pluralité d'appareils de station de base de radiodiffusion acceptant un service de diffusion - multidiffusion multimédia dans une zone donnée, dans lequel
la section de transmission de diversité d'émission (14) est configurée pour, quand il est déterminé qu'une retransmission est inutile, transmettre les nouvelles données de service de diffusion - multidiffusion multimédia avec une diversité d'émission en fonction d'une information de cadence de transmission provenant de l'appareil de station de base de radiodiffusion.

4. Appareil de station de base de radiodiffusion (1) selon l'une quelconque des revendications 1 à 3, dans lequel, quand il est déterminé qu'une retransmission est inutile, la section de transmission de diversité d'émission transmet les nouvelles données de service de diffusion - multidiffusion multimédia.

5. Appareil de station de base de radiodiffusion (1) selon l'une quelconque des revendications 1 à 4, dans lequel la diversité d'émission est une diversité d'émission de type en boucle ouverte.

6. Procédé de radiocommunication acceptant un service de diffusion - multidiffusion multimédia, comprenant :
la réception d'une information en retour pour des données de transmission entrantes ;
la détermination de la nécessité d'une retransmission en utilisant l'information en retour ;
**caractérisé par**
quand il est déterminé qu'une retransmission est nécessaire, effectuer un multiplexage spatial des nouvelles données de service de diffusion - multidiffusion multimédia et des données retransmises pour transmettre des données multiplexées ; et
quand il est déterminé qu'une retransmission est inutile, effectuer la transmission des nouvelles données de service de diffusion - multidiffusion multimédia avec une diversité d'émission.

7. Procédé de radiocommunication selon la revendication 6 dans une pluralité d'appareils de station de base de radiodiffusion acceptant un service de diffusion - multidiffusion multimédia dans une zone donnée, comprenant en outre :
dans l'un des appareils de station de base de radiodiffusion, la détermination de la nécessité d'une retransmission vers la zone donnée en utilisant les résultats de la détermination de retransmission provenant de l'appareil de station de base de radiodiffusion et des autres appareils de station de base de radiodiffusion, et la détermination d'une cadence de transmission.

8. Procédé de radiocommunication selon la revendication 7, dans lequel, quand il est déterminé qu'une retransmission est nécessaire, les appareils de station de base de radiodiffusion autres que l'appareil de station de base de radiodiffusion parmi les appareils de station de base de radiodiffusion transmettent les nouvelles données de service de diffusion - multidiffusion multimédia multiplexées spatialement et les données retransmises en fonction de l'information de cadence de transmission provenant dudit appareil de station de base de radiodiffusion.

9. Procédé de radiocommunication selon l'une quelconque des revendications 6 à 8, dans lequel, quand il est déterminé qu'une retransmission est inutile, les nouvelles données de service de diffusion - multidiffusion multimédia sont transmises avec une diversité d'émission.

10. Procédé de radiocommunication selon l'une quelconque des revendications 6 à 9, dans lequel la diversité d'émission est une diversité d'émission de type en boucle ouverte.
